(19) Europäisches Patentamt
European Patent Office
Office européen des brevets

(11) Publication number: **0 015 132**
**B1**

(12) **EUROPEAN PATENT SPECIFICATION**

(45) Date of publication of patent specification: **22.02.84**

(51) Int. Cl.³: **C 01 B 33/28, B 01 J 29/28**

(21) Application number: **80300463.9**

(22) Date of filing: **19.02.80**

(54) **Crystalline zeolitic material, synthesis and use thereof.**

(30) Priority: **21.02.79 US 13640**
**08.08.79 US 64703**

(43) Date of publication of application:
**03.09.80 Bulletin 80/18**

(45) Publication of the grant of the patent:
**22.02.84 Bulletin 84/8**

(84) Designated Contracting States:
**BE DE FR GB IT NL**

(56) References cited:
**EP - A - 0 001 695**
**US - A - 4 016 245**
**US - A - 4 046 859**
**US - A - 4 107 224**
**US - A - 4 108 881**

(73) Proprietor: **MOBIL OIL CORPORATION**
**150 East 42nd Street**
**New York New York 10017 (US)**

(72) Inventor: **Rollman, Louis Deane**
**3 Dorann Avenue**
**Princeton New Jersey 08540 (US)**
Inventor: **Valyocsik, Ernest William**
**960 Randolph Drive**
**Yardley Pennsylvania 19067 (US)**
Inventor: **Chu, Pochen**
**1173 Ollerton Road**
**West Deptford, New Jersey (US)**

(74) Representative: **West, Alan Harry et al,**
**Mobil Court 3 Clements Inn**
**London WC2A 2EB (GB)**

**EP 0 015 132 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Crystalline zeolitic material, synthesis and use thereof

This invention relates to a new crystalline zeolitic material, to a method for synthesising it, and to its use, inter alia as organic conversion catalyst.

Many crystalline zeolites are known, in most cases as aluminosilicates. Some occur (at least so far) only in nature, for instance paulingite and merlinoite; some occur only as a result of synthesis, for instance zeolites A and ZSM-5; and some occur in both natural and synthetic forms, for instance mordenite, a synthetic counterpart of which is known as Zeolon, and faujasite, synthetic counterparts of which are known as zeolites X and Y. Counterparts are of course demonstrated as such by correspondence of their X-ray diffraction data, the indicia by means of which the individuality of a zeolite is established. Such data are a manifestation of the particular geometry of the three-dimentional lattice, formed of $SiO_4$ and in most cases $AlO_4$ tetrahedra crosslinked by the sharing of oxygen atoms and including sufficient cationic complement to balance the resulting negative charge on aly $AlO_4$ tetrahedra, of which a zeolite may consist.

The chemical formula of an aluminosilicate zeolite is thus

$$M_{x/n}:(AlO_2)_x:(SiO_2)_y$$

where M is a cation of valence n and x and y are the number of aluminum and silicon atoms, respectively, in the unit cell (the geometric unit which repeats throughout the extent of the lattice). This expression is however frequently transmuted into the "mole ratio of oxides" form,

$$M_{2/n}O:Al_2O_3:{}_2y/xSiO_2$$

which is of cource empirically ascertainable and thus the only formula which can be ascribed to a zeolite when its unit cell contents are unknown. Since the only significant quantity in such a formula is the term 2y/x, and since this term (which is almost invariably a range) can usually be satisfied by many zeolites of widely differing lattice geometry, chemical formula is not uniquely restrictive in establishing the identity of a zeolite. Furthermore, such a formula frequently expresses artefact when empirically derived, the cationic-valence/aluminium-atoms ratio deviating from unity, and it fails to provide for zeolites whose lattice structure can be brought into existence from reaction mixtures from which alumina is excluded. Moreover, both the unit cell formula and the "mole ratio of oxides" formula imply that the geometrical identity which persists between succeeding unit cells is accompanied by their compositional identity.

In order to exemplify these facts, reference is made to U.S. Patent 4,108,881 describing ZSM-11, U.S. Patent 4,016,245 describing ZSM-35 and U.S. Patent 4,046,859 describing ZSM-21 and ZSM-38, each of which zeolites is characterized by an X-ray diffraction pattern which is unique for that particular species. However, comparison of the chemical formulae of those zeolites, expressed in terms of mole ratios of oxides, indicates virtual compositional identity between ZSM-21, ZSM-35 and ZSM-11. Furthermore, comparison of the compositions of the reaction mixtures from which those zeolites are produced (expressed in general terms as ranges of mole ratios of particular pairs of reaction components, for example $SiO_2/Al_2O_3$, $H_2O/SiO_2$, $OH/SiO_2$, $M/SiO_2$ and $R/SiO_2$) shows that mixtures of very similar—and in the cases of ZSM-35 and ZSM-21, identical—general composition can be used. Nevertheless, it must be clearly understood that zeolite synthesis involves extremely delicate techniques requiring great skill and experience. For this reason, it is possible to produce two or more crystallographically distinct zeolite species from reaction mixtures of the same general broad composition by appropriate manipulation of the numerous compositional variables.

Similar considerations apply to the zeolite of the present invention and to its synthesis. That zeolite, which is referred to as ZSM-48, has a lattice structure previously unknown, as evidenced by its X-ray diffraction data.

In the X-ray data given below, the relative intensities of the X-ray diffraction bands are expressed in general terms by the symbols W (weak), VS (very strong), W-VS (weak to very strong) and W-M (weak to medium).

According to the present invention, there is provided a crystalline zeolitic material, ZSM-48, having a lattice constituted by $SiO_4$ and possibly $AlO_4$ tetrahedra crosslinked by the sharing of oxygen atoms having the compositional formula expressed in terms of moles of oxides per 100 moles of silica:

$$(0 \text{ to } 15)\ (RN)_2O:(0 \text{ to } 15)\ M_{2/n}O:(0 \text{ to } 2)\ Al_2O_3:(100)\ SiO_2$$

in which M is at least one cation of valence n and RN is a $C_1$ to $C_{20}$ organic compound having at least one amine functional group of $pKa \geqslant 7$, and being characterized by at least the following interplanar spacings and relative intensities of its X-ray diffraction pattern:

TABLE 1

| d(Å) | Relative intensity |
|---|---|
| 11.8±0.2 | W-VS |
| 10.2±0.2 | W-M |
| 7.2±0.15 | W |
| 4.2±0.08 | VS |
| 3.9±0.08 | VS |
| 3.6±0.06 | W |
| 3.1±0.05 | W |
| 2.85±0.05 | W |

These values were determined by standard techniques. The radiation was the K-alpha doublet of copper, and a scintillation counter spectrometer with a strip chart pen recorder was used. The peak heights, I, and the positions as a function of 2 times theta, where theta is the Bragg angle, were read from the spectrometer chart. From these, the relative intensities, 100 $I/I_o$, where $I_o$ is the intensity of the strongest line or peak, and d (obs.), the interplanar spacing in A, corresponding to the recorded lines, where calculated. The pattern is preserved upon ion exchanges, possibly with some minor shifts in interplanar spacing and variation in relative intensity. Other minor variations can occur depending on the silicon to aluminum ratio of the particular same and its thermal history.

When the material contains tetrahedrally coordinated (framework) aluminum, a fraction of the amine functional groups may be protonated. The doubly protonated form, in conventional notation, would be $(RNH)_2O$ and is equivalent in stoichiometry to $2RN+H_2O$.

ZSM-48 can be prepared from a reaction mixture containing a source of silica, RN, an alkali metal oxide ($M_2O$), e.g. sodium oxide, water, and optionally alumina, and maintaining the reaction mixture at crystallization temperature, generally a temperature from 80 to 250°C, until crystals of the zeolite are formed. Preferably, crystallization is carried out under pressure in an autoclave or static bomb reactor. Thereafter, the crystals are separated from the liquid and recovered.

The reaction mixture is prepared from materials which supply the appropriate oxides. Such materials include sodium silicate, silica hydrosol, silica gel, silicic acid, RN, sodium hydroxide, sodium chloride, aluminum sulfate, sodium aluminate, aluminum oxide, or aluminum itself. RN is a $C_1$—$C_{20}$ organic compound containing at least one amine functional group of $pk_a \geqslant 7$ and includes such compounds as $C_3$—$C_{18}$ primary, secondary, and tertiary amines, cyclic amine, such as piperidine, pyrrolidine and piperazine, and polyamines such as $NH_2$—$C_nH_{2n}$—$NH_2$ wherein n is 4—12.

The precise composition of the reaction mixture will, however, depend on the nature of the organic, nitrogen-containing compound RN. Thus, when RN is an amine of the formula $C_xH_{2x+1}$—$NH_2$ in which x is from 1 to 20 and of $pk_a \geqslant 7$, the reaction mixture may have a composition, in terms of mole ratios of oxides, falling within the ranges

| | | Broad | Preferred |
|---|---|---|---|
| $Al_2O_3/SiO_2$ | = | 0 to 0.02 | 0 to 0.01 |
| $M_2O/SiO_2$ | = | 0 to 2.0 | 0.1 to 1.0 |
| $OH^-/SiO_2$ | = | 0 to 0.25 | 0 to 0.1 |
| $H^+$(added)/$SiO_2$ | = | 0 to 0.2 | 0 to 0.05 |
| $H_2O/SiO_2$ | = | 10 to 100 | 20 to 70 |
| $(RN)_2O/SiO_2$ | = | 0.01 to 2.0 | 0.05 to 1.0 |

Similarly, when RN is a cyclic amine having up to 20 carbon atoms and of $pk_a \geqslant 7$, the reaction mixture may have a composition, in terms of mole ratios of oxides, falling within the ranges

| | | Broad | Preferred |
|---|---|---|---|
| $Al_2O_3/SiO_2$ | = | 0 to 0.02 | 0 to 0.01 |
| $M_2O/SiO_2$ | = | 0 to 2.0 | 0.1 to 1.0 |
| $OH^-/SiO_2$ | = | 0 to 0.25 | 0 to 0.1 |
| $H^+$(added)/$SiO_2$ | = | 0 to 0.2 | 0 to 0.05 |
| $H_2O/SiO_2$ | = | 10 to 100 | 20 to 70 |
| $(RN)_2O/SiO_2$ | = | 0.01 to 2.0 | 0.05 to 1.0 |

Further, when RN is an amine of the formula $NH_2$—$C_xH_{2x}$—$NH_2$ in which x is from 4 to 12 and of $pk_a \geqslant 7$, the reaction mixture may have a composition, expressed in mole ratios of oxides, falling with the range

| | | |
|---|---|---|
| $Al_2O_3/SiO_2$ | = | 0 to <0.005 |
| $M_2O/SiO_2$ | = | 0 to 2.0 |
| $OH^-/SiO_2$ | = | 0 to 0.15 |
| $H^+(added)/SiO_2$ | = | 0 to 0.2 |
| $H_2O/SiO_2$ | = | 10 to 100 |
| $(RN)_2O/SiO_2$ | = | 0.01 to 2.0 |

preferably $Al_2O_3/SiO_2$=0 to 0.002 and preferably $OH^-/SiO_2$=0 to 0.10, the remaining ratios having the preferred ranges given above for the cyclic and primary amines. $H^+$(added) is moles acid added in excess of the moles of hydroxide added. In calculating $H^+$(added) and OH values, the term acid (H+) includes both hydronium ion, whether free or coordinated, and aluminum. Thus aluminum sulfate, for example, would be considered a mixture of aluminum oxide, sulfuric acid, and water. An amine hydrochloride would be a mixture of amine and HCl.

Any original cations can be replaced, at least in part, by calcination and/or ion exchange. Calcination will convert as-synthesised organic cations to protons. Exchange may be performed with a metal of Groups 2 through 8 of the Periodic Table or with hydrogen ions or precursors thereof such as ammonium. Catalytically acitve forms of ZSM-48 can result from exchange with hydrogen, rare earth metals, aluminium, and manganese.

ZSM-48 can be used as a catalyst in intimate combination with an additional component such as tungsten, vanadium, molybdenum, rhenium, nickel, cobalt, chromium, manganese, or a noble metal such as platinum or palladium where a hydrogenation-dehydrogenation function is to be performed. Such a component can be introduced by exchange, impregnation or physical intimate admixture, in known manner.

ZSM-48 when employed either as an adsorbent or as a catalyst should be dehydrated, at least partially, by heating to a temperature in the range of 100 to 600°C in an atmosphere, such as air, nitrogen, etc. and at atmospheric, subatmospheric or superatmospheric pressures for between 1 and 48 hours. Dehydration can also be performed at room temperature merely by placing the material in a vacuum, but a longer time is required to obtain a sufficient amount of dehydration.

For catalytic usage ZSM-48 may be composited with a matrix such as described in our European Specification 0,001,695. The relative proportions of ZSM-48 and matrix vary widely with the content of zeolitic material ranging from about 1 to about 90 percent by weight and more usually, particularly when the composite is prepared in the form of beads, in the range of about 2 to about 70 percent by weight of the composite.

Employing a catalytically active form of ZSM-48 containing a hydrogenation component, reforming stocks can be reformed employing a temperature between 300°C and 600°C. The pressure can be between 790 and 6995 kPa but is preferably between 1480 and 4928 kPa. The liquid hourly space velocity is generally between 0.1 and 10, preferably between 0.5 and 4 and the hydrogen to hydrocarbon mole ratio is generally between 1 and 200 preferably between 4 and 12.

ZSM-48 can also be used for hydroisomerization of normal paraffins, when provided with a hydrogenation component, e.g. platinum. Hydroisomerization is carried out at a temperature between 100° and 400°C, preferably 150° to 300°C, with a liquid hourly space velocity between 0.01 and 2, preferably between 0.25 and 0.50 employing hydrogen such that the hydrogen to hydrocarbon mole ratio is between 1:1 and 5:1. Additionally, the catalyst can be used for olefin or aromatic isomerization employing temperatures between 50° and 400°C.

ZSM-48 can also be used as a catalyst for reducing the pourpoint of gas oils. This reduction is carried out at a liquid hourly space velocity between about 10 and about 30 and a temperature between about 400° and about 600°C. Other reactions which can be catalysed by it, with or without a metal, e.g., platinum, or palladium, include hydrogenation-dehydrogenation reactions and desulfurization reactions, olefin polymerization (oligomerization), aromatics alkylation with $C_2$—$C_{12}$ olefins or with $C_1$—$C_{12}$ alcohols, aromatics isomerization, disproportionation, and transalkylation and other organic compound conversion such as the conversion of alcohols (e.g. methanol) to hydrocarbon.

In the examples which follow ZSM-48 was prepared from reaction mixtures of the composition range:

$$(0.1 \text{ to } 0.5)RN:(0.3 \text{ to } 0.8)Na_2O:(0 \text{ to } 0.02)Al_2O_3SiO_2:(20 \text{ to } 70)H_2O$$

wherein RN is a $C_1$—$C_{20}$ organic compound containing at least one amine functional group of $pK_a \geqslant 7$.

Examples 1—17

A starting gel reaction mixture was prepared from sodium silicate (by weight 27.8% $SiO_2$, 8.4% $Na_2O$, 64% $H_2O$), a $C_3$—$C_{12}$ diamine compound, sodium hydroxide and water. Crystallization was carried out with stirring in a stainless steel autoclave at 160°C. After crystallization, the solids were separated by filtration and then water washed followed by drying at about 100°C. The amounts of starting material, identification of same, product characterizations and reaction times are listed in Table 2.

The x-ray diffraction patterns of the products of Examples 5 and 7 are shown in Figures 1 and 2, respectively, and their numerical values are shown in Table 3 below. In Table 3, $2\theta$ signifies the positions of the diffraction peaks, D the interplanar spacings in Angstroms derived from the peaks, and INT the relative intensities of the peaks. Analytical and sorption data of the products of Examples 2 to 9 are listed in Table 4. Sorption was determined after dehydration at at least 200°C.

TABLE 2

Reaction mixture composition[a]

| Ex. | $Al_2O_3/SiO_2$ | $OH/SiO_2$ | R[c] | Days | Product |
|---|---|---|---|---|---|
| 1 | 0 | 0 | None | 2 | Amorphous |
| 2 | 0 | 0 | $C_3DN$ | 3 | Dense phase |
| 3 | 0 | 0 | $C_4DN$ | 3 | ZSM-48 |
| 4 | 0 | 0 | $C_5DN$ | 2 | ZSM-48 |
| 5 | 0 | 0 | $C_6DN$ | 2 | ZSM-48 |
| 6 | 0 | 0 | $C_7DN$ | 2 | ZSM-48 |
| 7 | 0 | 0 | $C_8DN$ | 2 | ZSM-48 |
| 8 | 0 | 0 | $C_9DN$ | 2 | ZSM-48 |
| 9 | 0 | 0 | $C_{10}DN$ | 3 | ZSM-48 |
| 10 | 0 | 0 | $C_{12}DN$ | 3 | b |
| 11 | 0.002 | 0 | $C_8DN$ | 3 | ZSM-48 |
| 12 | 0.005 | 0 | $C_8DN$ | 2 | 40%, ZSM-48<br>60% ZSM-11 |
| 13 | 0.005 | 0 | $C_5DN$ | 2 | 10% ZSM-11<br>90% ZSM-5 |
| 14 | 0 | 0.30 | $C_5DN$ | 2 | 30% ZSM-5 |
| 15 | 0 | 0.15 | $C_5DN$ | 2 | 15% ZSM-5 |
| 16 | 0 | 0.30 | $C_8DN$ | 2 | 50% ZSM-11 |
| 17 | 0 | 0.15 | $C_8DN$ | 2 | ZSM-48<br>10% ZSM-11 |

[a] $H_2O/SiO_2=40$, $Na/SiO_2=0.59$, $R/SiO_2=0.30$
[b] ZSM-48 and second unidentified component
[c] $C_3DN=C_3$ diamine, $C_4DN=C_4$ diamine etc.

TABLE 3

X-ray diffraction of data of ZSM-48

| Product of Example 5 | | | Product of Example 7 | | |
|---|---|---|---|---|---|
| $2\theta$ | D | INT | $2\theta$ | D | INT |
| 7.45 | 11.87 | 14 | 7.42 | 11.91 | 15 |
| 8.65 | 10.22 | 6 | 8.60 | 10.28 | 7 |
| 12.26 | 7.22 | 2 | 12.26 | 7.22 | 3 |
| 14.46 | 6.13 | 1 | 14.42 | 6.14 | 2 |
| 15.06 | 5.88 | 6 | 15.06 | 5.88 | 6 |
| 17.45 | 5.08 | 1 | 17.47 | 5.08 | 1 |
| 19.05 | 4.66 | 4 | 19.01 | 4.67 | 4 |
| 21.13 | 4.20 | 76 | 21.18 | 4.19 | 84 |
| 22.74 | 3.91 | 100 | 22.77 | 3.91 | 100 |
| 24.74 | 3.60 | 12 | 24.73 | 3.60 | 13 |
| 25.70 | 3.47 | 2 | 25.75 | 3.46 | 2 |
| 26.10 | 3.41 | 3 | 26.15 | 3.41 | 3 |
| 26.36 | 3.38 | 3 | 26.38 | 3.38 | 4 |
| 27.60 | 3.23 | 1 | 27.65 | 3.23 | 1 |
| 28.83 | 3.10 | 2 | 28.84 | 3.10 | 3 |
| 31.32 | 2.86 | 11 | 31.33 | 2.86 | 13 |
| 32.83 | 2.73 | 2 | 32.88 | 2.72 | 2 |
| 34.05 | 2.63 | 2 | 34.05 | 2.63 | 2 |
| 35.44 | 2.53 | 1 | 35.48 | 2.53 | 1 |
| 36.30 | 2.47 | 2 | 36.30 | 2.47 | 3 |
| 37.66 | 2.39 | 3 | 37.70 | 2.39 | 3 |
| 38.40 | 2.34 | 2 | 38.40 | 2.34 | 2 |
| 43.18 | 2.10 | 2 | 43.25 | 2.09 | 3 |

TABLE 3 (contd.)
X-ray diffraction of data of ZSM-48

| Product of Example 5 | | | Product of Example 7 | | |
|---|---|---|---|---|---|
| 2θ | D | INT | 2θ | D | INT |
| 43.77 | 2.07 | 3 | 43.83 | 2.07 | 4 |
| 44.58 | 2.03 | 1 | 44.82 | 2.02 | 1 |
| 45.12 | 2.01 | 1 | | | |
| 46.30 | 1.96 | 2 | 46.37 | 1.96 | 2 |
| 49.22 | 1.85 | 2 | 49.22 | 1.85 | 2 |
| 50.07 | 1.82 | 1 | 50.12 | 1.82 | 1 |
| 51.56 | 1.77 | 1 | 51.57 | 1.77 | 1 |

Review of the data in Table 2 shows that (1) no ZSM-48 crystallized in the absence of the diamine. (Ex. 1) (2) $C_4$—$C_{10}$ diamines yielded ZSM-48 in good crystallinity (Ex. 3—9) (3) ZSM-48 can be prepared with added aluminum although with these diamines, ZSM-5 (Ex. 13) or ZSM-11 (Ex. 12) may be preferred, depending on reaction mixture composition, and (4) that an optimum $OH/SiO_2$ ratio exists near zero.

Example 18

This example shows that very different types of amines are effective in ZSM-48 synthesis. A reaction mixture was prepared as in Examples 1—17 except that the amine was N,N$^1$-bis(3-aminopropyl) piperazine. Mole ratios of reactants were as follows:

$Al_2O_3/SiO_2$ = 0
$H_2O/SiO_2$ = 40
$OH/SiO_2$ = 0
$Na/SiO_2$ = 0.6
$R/SiO_2$ = 0.3

after 2 days at 160°C in a stirred autoclave, ZSM-48 was obtained in good crystallinity.

Example 19

This example shows that simple amines are effective in ZSM-48 synthesis. A reaction mixture was prepared according to the procedures of Examples 1—17 except that the organic was n-hexylamine. The reaction mixture composition had the following mole ratios:

$Al_2O_3/SiO_2$ = <0.01
$H_2O/SiO_2$ = 40
$OH/SiO_2$ = 0
$Na/SiO_2$ = 0.6
$R/SiO_2$ = 0.3

Crystallization was conducted in a stirred autoclave at 160°C for 2 days. The crystalline product was ZSM-48, contaminated with a minor portion of $\alpha$-cristobalite.

Example 20

The product of Example 7 was tested for relative hexane cracking activity (alpha value $\alpha$), and for constraint index (the ratio of the rate constant for cracking of n-hexane to that of 3-methylpentane) at 510 and at 538°C*. At 510°C, the ZSM-48 product exhibited a constraint index of 5.3 and an $\alpha$ of 5.0. At 538°C, the C.I. was 3.4.

*The $\alpha$-test is described in a letter to the editor entitled 'Superactive Crystalline Aluminosilicate Hydrocarbon Cracking Catalysts' by P. B. Weisz and J. N. Miale, Journal of Catalysis, *Vol. 4,* pp. 527—529 (August 1965). The constraint index test is described in U.S. Patent 4,107,224.

TABLE 4
Characterization data

| | | Composition[a] | | | | Sorption, wt% (25°C)[b] | | |
|---|---|---|---|---|---|---|---|---|
| | $SiO_2/Al_2O_3$ | Al | Na | N | DN[c] | NC6 | CyC6 | $H_2O$ |
| Product of Example 2 | 400 | 0.51 | 0.4 | 6.2 | 3.4 | — | — | — |
| Product of Example 3 | 910 | 0.17 | 0.3 | 1.4 | 2.6 | 3.3 | — | — |
| Product of Example 4 | 870 | 0.23 | 0.8 | 6.9 | 3.6 | 3.7 | — | — |
| Product of Example 5 | 1320 | 0.15 | 0.7 | 6.2 | 3.3 | 2.5 | 1.7 | 1.4 |
| Product of Example 6 | 1340 | 0.15 | 0.5 | 5.6 | 3.0 | 3.0 | — | — |
| Product of Example 7 | 1170 | 0.17 | 0.7 | 5.9 | 3.0 | 3.6 | 2.8 | 1.1 |
| Product of Example 8 | 1190 | 0.17 | 0.5 | 5.0 | 2.7 | — | — | — |
| Product of Example 9 | 1290 | 0.17 | 0.5 | 5.2 | 2.7 | — | — | — |
| | | | | Average= | 3.1 | | | |

[a]Moles per 100 moles $SiO_2$
[b]Hydrocarbons, 20 mm; water, 12 mm; NC6=n-hexane; CyC6=cyclohexane
[c]Diamine.

As previously mentioned, the X-ray diffraction pattern is preserved upon ion exchanges, possibly with minor shifts in spacing and variation in relative intensity. We have found that the calcined, sodium-exchanged form of ZSM-48 exhibits the following interplanar spacings:

TABLE 5

| D(Å) | Relative intensity |
|---|---|
| 11.8±0.2 | W-VS |
| 10.2±0.2 | W-M |
| 7.2±0.15 | W-VS |
| 4.2±0.08 | VS |
| 3.9±0.08 | VS |
| 3.6±0.06 | W |
| 3.1±0.05 | W |
| 2.85±0.05 | W |

The relative intensities are given by the same symbols as used in Table 1 above.

The effect of calcination and sodium exchange is illustrated by Examples 21 and 22 below.

Example 21

The dried product of Example 5 (two grams) was calcined in nitrogen for 2.5 hours at 550°C followed by cooling in nitrogen for about 30 minutes. The calcined sample was ion exchanged three times with stirring at 80°C with 100 ml 2N sodium nitrate, for 2 hours each time. The sodium form sample was filtered, washed with water and dried under a heat lamp for about 30 minutes.

The X-ray diffraction data of the calcined sodium-exchange form is given below in Table 6, and the X-ray scan is shown in Figure 3 of the accompanying drawings.

The headings to the columns of Table 6 have the same meanings as those of Table 3.

TABLE 6
X-Ray diffraction data of ZSM-48
Product of Example 21

| | (Na-Exchanged) | |
|---|---|---|
| 2θ | D | INT |
| 7.56 | 11.69 | 43 |
| 8.74 | 10.12 | 18 |
| 10.66 | 8.30 | 1 |
| 12.33 | 7.18 | 7 |
| 13.09 | 6.76 | 1 |
| 13.58 | 6.52 | 1 |
| 14.51 | 6.10 | 6 |
| 15.15 | 5.85 | 12 |
| 16.92 | 5.24 | 1 |

TABLE 6 (contd.)
X-Ray diffraction data of ZSM-48
Product of Example 21

(Na-Exchanged)

| 2θ | D | INT |
|---|---|---|
| 17.52 | 5.06 | 2 |
| 18.12 | 4.90 | 3 |
| 18.65 | 4.76 | 2 |
| 19.02 | 4.67 | 3 |
| 19.36 | 4.58 | 1 |
| 19.82 | 4.48 | 1 |
| 20.54 | 4.32 | 5 |
| 21.13 | 4.20 | 100 |
| 21.82 | 4.07 | 4 |
| 22.47 | 8.96 | 12 |
| 22.93 | 3.88 | 72 |
| 23.82 | 3.74 | 3 |
| 24.18 | 3.68 | 3 |
| 24.56 | 3.62 | 5 |
| 24.96 | 3.57 | 8 |
| 25.34 | 3.51 | 6 |
| 25.74 | 3.46 | 8 |
| 26.11 | 3.41 | 3 |
| 26.51 | 3.36 | 5 |
| 27.96 | 3.19 | 1 |
| 29.01 | 3.08 | 2 |
| 30.66 | 2.92 | 1 |
| 31.35 | 2.85 | 12 |
| 31.64 | 2.83 | 1 |
| 32.61 | 2.76 | 2 |
| 32.89 | 2.72 | 2 |
| 33.56 | 2.67 | 1 |
| 34.11 | 2.63 | 2 |
| 35.66 | 2.52 | 1 |
| 36.20 | 2.48 | 3 |
| 36.57 | 2.46 | 2 |
| 37.05 | 2.43 | 2 |
| 37.48 | 2.40 | 2 |
| 37.89 | 2.37 | 3 |
| 38.38 | 2.35 | 2 |
| 38.92 | 2.31 | 1 |
| 40.31 | 2.24 | 1 |
| 43.02 | 2.10 | 4 |
| 44.03 | 2.06 | 2 |
| 45.05 | 2.01 | 1 |
| 45.96 | 1.97 | 1 |
| 46.48 | 1.95 | 1 |
| 48.11 | 1.89 | 1 |
| 49.28 | 1.85 | 1 |
| 51.69 | 1.77 | 1 |

Example 22

The dried product of Example 7 (2 grams) was calcined for 4 hours in nitrogen at 550°C followed by cooling in ammonium gas for about 30 minutes. The calcined sample was exchanged twice with 100 ml 1N ammonium nitrate solution, at 80°C with stirring for about 2 hours for each exchange. The ammonium form sample was then washed, dried and again calcined for 2 hours at 550°C in nitrogen and cooled in nitrogen. This calcined sample was ion-exchanged 3 times with stirring at 80°C in 2N sodium nitrate solution. The sodium form sample was filtered, washed with water and dried under a heat lamp for about 30 minutes.

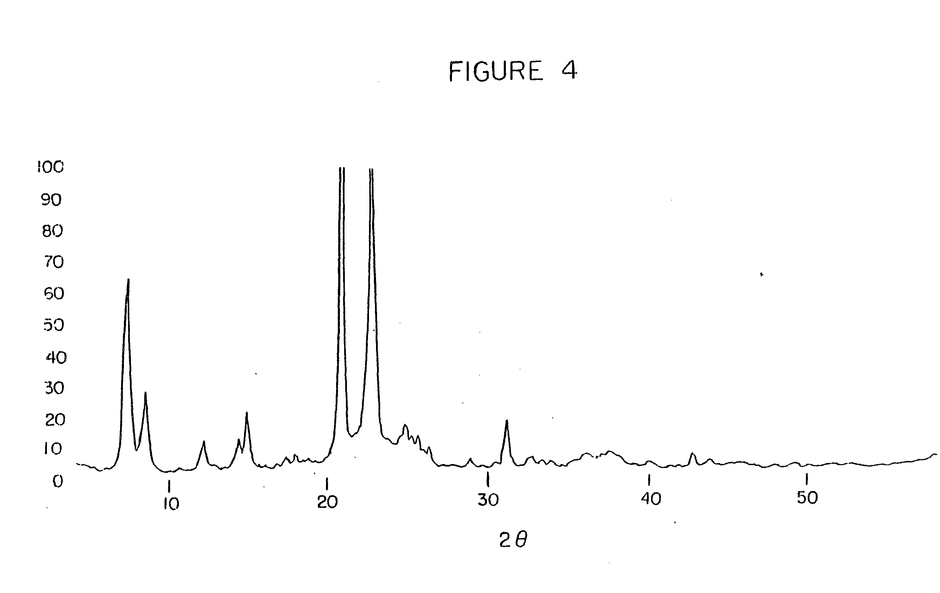

The X-ray diffraction data of the calcined sodium-exchanged form is given below in Table 7, and the X-ray scan is shown in Figure 4 of the accompanying drawings.

The headings to the columns of Table 7 have the same meanings as those of Table 3.

TABLE 7
X-Ray diffraction data of ZSM-48
Product of Example 22

(Na-Exchanged)

| 2θ | D | INT |
|---|---|---|
| 7.53 | 11.74 | 48 |
| 8.71 | 10.15 | 18 |
| 10.70 | 8.27 | 1 |
| 12.30 | 7.20 | 7 |
| 13.04 | 6.79 | 1 |
| 13.62 | 6.50 | 1 |
| 14.52 | 6.10 | 8 |
| 15.10 | 5.87 | 14 |
| 16.90 | 5.25 | 1 |
| 17.53 | 5.06 | 3 |
| 18.10 | 4.90 | 3 |
| 18.64 | 4.76 | 2 |
| 19.06 | 4.66 | 2 |
| 19.62 | 4.52 | 2 |
| 20.07 | 4.42 | 2 |
| 20.47 | 4.34 | 5 |
| 21.10 | 4.21 | 100 |
| 21.93 | 4.05 | 7 |
| 22.41 | 3.97 | 12 |
| 22.91 | 3.88 | 77 |
| 23.82 | 3.74 | 4 |
| 24.16 | 3.68 | 4 |
| 24.52 | 3.68 | 6 |
| 24.90 | 3.58 | 10 |
| 25.32 | 3.52 | 7 |
| 25.72 | 3.46 | 8 |
| 26.10 | 3.41 | 4 |
| 26.50 | 3.36 | 6 |
| 29.04 | 3.07 | 2 |
| 30.71 | 2.91 | 1 |
| 31.35 | 2.85 | 12 |
| 32.55 | 2.75 | 1 |
| 32.84 | 2.73 | 2 |
| 33.56 | 2.67 | 1 |
| 34.14 | 2.63 | 2 |
| 35.64 | 2.52 | 2 |
| 36.20 | 2.48 | 3 |
| 36.59 | 2.46 | 2 |
| 37.00 | 2.48 | 2 |
| 37.40 | 2.40 | 2 |
| 37.85 | 2.38 | 4 |
| 38.34 | 2.35 | 3 |
| 38.86 | 2.32 | 1 |
| 40.33 | 2.24 | 1 |
| 43.04 | 2.10 | 4 |
| 44.06 | 2.06 | 2 |

## Claims

1. A crystalline zeolitic material having a lattice comprising $SiO_4$ tetrahedra crosslinked by the sharing of oxygen atoms having the compositional formula expressed in terms of moles of oxides per 100 moles of silica:

$$(0\ \text{to}\ 15)(RN)_2O:(0\ \text{to}\ 15)M_{2/n}O:(0\ \text{to}\ 2)Al_2O_3:(100)SiO_2$$

in which M is at least one cation of valence n and RN is a $C_1$ to $C_{20}$ organic compound having at least one amine functional group of pKa$\geqslant$7, and being characterized by at least the following interplanar spacings and relative intensities of its X-ray diffraction pattern:

| d(A) | Relative intensity |
|---|---|
| 11.8±0.2 | W-VS |
| 10.2±0.2 | W-M |
| 7.2±0.15 | W |
| 4.2±0.08 | VS |
| 3.9±0.08 | VS |
| 3.6±0.06 | W |
| 3.1±0.05 | W |
| 2.85±0.05 | W |

2. A crystalline zeolitic material according to claim 1 the lattice of which also comprises $AlO_4$.

3. A crystalline zeolitic material according to claim 1 or claim 2 wherein RN is of the formula $H_2N—C_xH_{2x}—NH_2$ in which x is from 4 to 12.

4. A crystalline zeolitic material according to claim 1 or claim 2 wherein RN is of the formula $C_xH_{2x+1}—NH_2$ in which x is from 1 to 20.

5. A crystalline zeolitic material according to any of claims 2 to 4 which contains hydrogen, ammonium or rare earth cations.

6. A crystalline zeolitic material according to any of claims 2 to 5, in which the molar ratio of silica to alumina is from 800 to 15,000.

7. A method of preparing the crystalline zeolitic material claimed in claim 1, which comprises preparing a reaction mixture containing a source of silica, an alkali metal oxide, RN, water and optionally alumina and having a composition in terms of mole ratios of oxides falling within the following ranges:

| | | |
|---|---|---|
| $Al_2O_3/SiO_2$ | = | 0 to 0.02 |
| $M_2O/SiO_2$ | = | 0 to 2.0 |
| $OH^-/SiO_2$ | = | 0 to 0.25 |
| $H^+$(added)/$SiO_2$ | = | 0 to 0.2 |
| $H_2O/SiO_2$ | = | 10 to 100 |
| $(RN)_2O/SiO_2$ | = | 0.01 to 2.0 |

wherein M is at least one alkali metal and RN is an amine of the formula $C_xH_{2z+1}—NH_2$ in which x is from 1 to 20 and of $pk_a \geqslant 7$; and maintaining the mixture at crystallization temperature until crystals of the zeolite are formed.

8. A method for preparing the crystalline zeolitic material claimed in claim 1, which comprises preparing a reaction mixture containing a source of silica, an alkali metal oxide, RN, water and optionally alumina and having a composition in terms of mole ratios of oxides falling within the following ranges:

| | | |
|---|---|---|
| $Al_2O_3/SiO_2$ | = | 0 to 0.02 |
| $M_2O/SiO_2$ | = | 0 to 2.0 |
| $OH^-/SiO_2$ | = | 0 to 0.25 |
| $H^+$(added)/$SiO_2$ | = | 0 to 0.2 |
| $H_2O/SiO_2$ | = | 10 to 100 |
| $(RN)_2O/SiO_2$ | = | 0.01 to 2.0 |

wherein M is at least one alkali metal and RN is a cyclic amine having up to 20 carbon atoms and of $pk_a \geqslant 7$; and maintaining the mixture at crystallization temperature until crystals of the zeolite are formed.

9. A method according to claim 7 or claim 8, wherein the reaction mixture has the composition

| | | |
|---|---|---|
| $Al_2O_3/SiO_2$ | = | 0 to 0.01 |
| $M_2O/SiO_2$ | = | 0.1 to 1.0 |
| $OH^-/SiO_2$ | = | 0 to 0.1 |
| $H^+$(added)/$SiO_2$ | = | 0 to 0.05 |
| $H_2O/SiO_2$ | = | 20 to 70 |
| $(RN)_2O/SiO_2$ | = | 0.05 to 1.0 |

10. A method for preparing the crystalline zeolitic material claimed in claim 1, which comprises preparing a reaction mixture containing a source of silica, an alkali metal oxide, RN, water and optionally alumina and having a composition in terms of mole ratios of oxides falling within the following ranges:

| | | |
|---|---|---|
| $Al_2O_3/SiO_2$ | = | 0 to <0.005 |
| $M_2O/SiO_2$ | = | 0 to 2.0 |
| $OH^-/SiO_2$ | = | 0 to 0.15 |
| $H^+$(added)/$SiO_2$ | = | 0 to 0.2 |
| $H_2O/SiO_2$ | = | 10 to 100 |
| $(RN)_2O/SiO_2$ | = | 0.01 to 2.0 |

wherein M is at least one alkali metal and RN is an amine of the formula $NH_2—C_xH_{2x}—NH_2$ in which x is from 4 to 12 and of $pk_a \geqslant 7$; and maintaining the mixture at crystallization temperature until crystals of the zeolite are formed.

11. A method according to claim 10, wherein

$$Al_2O_3/SiO_2 = 0 \text{ to } 0.002$$

12. A method according to claim 10 or claim 11, wherein

$$OH^-/SiO_2 = 0 \text{ to } 0.10$$

13. A method according to any one of claims 10 to 12, wherein

| | | |
|---|---|---|
| $M_2O/SiO_2$ | = | 0.1 to 1.0 |
| $H^+$(added)/$SiO_2$ | = | 0 to 0.05 |
| $(RN)_2O/SiO_2$ | = | 0.05 to 1.0. |

**Patentansprüche**

1. Ein kristallines zeolithisches Material mit einem Gitter, das $SiO_4$-Tetraeder aufweist, die durch gemainsame Sauerstoffatome miteinander vernetzt sind, und das eine Zusammensetzungsformel aufweist, die ausgedrückt in Molen Oxide pro 100 Mole Siliciumoxid lautet:

$$(0 \text{ bis } 15)(RN)_2O:(0 \text{ bis } 15)M_{2/n}O:(0 \text{ bis } 2)Al_2O_3:(100)SiO_2$$

in der M wenigstens ein Kation der Valenz n ist und RN eine $C_1$ bis $C_{20}$-organische Verbindung, die wenigstens eine funktionelle Amingruppe mit einem $pKa \geqslant 7$ aufweist, und das durch wenigstens die nachfolgenden Netzebenenabstände und relativen Intensitäten seines Röntgen-Diffraktionsbildes gekennzeichnet ist:

| d(A) | Relative intensität |
|---|---|
| 11,8±0,2 | W-VS |
| 10,2±0,2 | W-M |
| 7,2±0,15 | W |
| 4,2±0,08 | VS |
| 3,9±0,08 | VS |
| 3,6±0,06 | W |
| 3,1±0,05 | W |
| 2,85±0,05 | W |

2. Ein kristallines zeolithisches Material nach Anspruch 1, dessen Gitter auch $AlO_4$ enthält.

3. Ein kristallines zeolithisches Material nach Anspruch 1 oder 2, bei dem RN die Formel $H_2N—C_xH_{2x}—NH_2$ aufweist, in der x von 4 bis 12 ist.

4. Ein kristallines zeolithisches Material nach Anspruch 1 oder 2, bei dem RN die Formel $C_xH_{2x+1}—NH_2$ aufweist, in der x von 1 bis 20 ist.

5. Ein kristallines zeolithisches Material nach einem der Ansprüche 2 bis 4, das Wasserstoff-, Ammonium- oder Seltenerd-Kationen enthält.

6. Ein kristallines zeolithisches Material nach einem der Ansprüche 2 bis 5, bei dem das molare Verhältnis von Siliciumoxid zu Aluminiumoxid von 800 bis 15 000 beträgt.

7. Ein Verfahren zur Herstellung des kristallinen zeolithischen Materials nach Anspruch 1, das das Herstellen einer Reaktionsmischung umfaßt, die eine Quelle für Siliciumdioxid, ein Alkalimetalloxid, RN, Wasser und gegebenenfalls Aluminiumoxid enthält und ausgedrückt in Molverhältnissen der Oxide eine in die folgenden Bereich fallende Zussammensetzung aufweist:

| | | |
|---|---|---|
| $Al_2O_3/SiO_2$ | = | 0 bis 0,02 |
| $M_2O/SiO_2$ | = | 0 bis 2,0 |
| $OH^-/SiO_2$ | = | 0 bis 0,25 |

| | | |
|---|---|---|
| $H^+$(zugesetzt)/$SiO_2$ | = | 0 bis 0,2 |
| $H_2O/SiO_2$ | = | 10 bis 100 |
| $(RN)_2O/SiO_2$ | = | 0,01 bis 2,0 |

worin M wenigstens ein Alkalimetall ist und RN ein Amin der Formel $C_xH_{2x+1}$—$NH_2$ ist, in dem x von 1 bis 20 ist und das einen $pk_a$-Wert⩾7 aufweist; sowie das Halten dieser Mischung bei der Kristallisationstemperatur, bis Kristalle des Zeolithen gebildet sind.

8. Ein Verfahren zur Herstellung des in Anspruch 1 beanspruchten kristallinen zeolithischen Materials, das das Herstellen einer Reaktionsmischung umfaßt, die eine Quelle für Siliciumoxid, ein Alkalimetalloxid, RN, Wasser sowie gegebenenfalls Aluminiumoxid enthält und ausgedrückt in Molverhältnissen von Oxiden eine Zusammensetzung aufweist, die in die folgenden Bereich fällt:

| | | |
|---|---|---|
| $Al_2O_3/SiO_2$ | = | 0 bis 0,02 |
| $M_2O/SiO_2$ | = | 0 bis 2,0 |
| $OH^-/SiO_2$ | = | 0 bis 0,25 |
| $H^+$(zugesetzt)/$SiO_2$ | = | 0 bis 0,2 |
| $H_2O/SiO_2$ | = | 10 bis 100 |
| $(RN)_2O/SiO_2$ | = | 0,01 bis 2,0 |

worin M wenigstens ein Alkalimetall ist und RN ein cyclisches Amin ist, das bis zu 20 Kohlenstoffatome und einen $pk_a$⩾7 aufweist; sowie das Halten der Mischung bei der Kristallisationstemperatur, bis sich Kristalle des Zeolithen gebildet haben.

9. Ein Verfahren nach Anspruch 7 oder Anspruch 8, bei dem die Reaktionsmischung die folgende Zusammensetzung aufweist:

| | | |
|---|---|---|
| $Al_2O_3/SiO_2$ | = | 0 bis 0,01 |
| $M_2O/SiO_2$ | = | 0,1 bis 1,0 |
| $OH^-/SiO_2$ | = | 0 bis 0,1 |
| $H^+$(zugesetzt)/$SiO_2$ | = | 0 bis 0,05 |
| $H_2O/SiO_2$ | = | 20 bis 70 |
| $(RN)_2O/SiO_2$ | = | 0,05 bis 1,0 |

10. Ein Verfahren zur Herstellung des in Anspruch 1 beanspruchten kristallinen zeolithischen Materials, das die Herstellung einer Reaktionsmischung umfaßt, die eine Quelle für Siliciumoxid, ein Alkalimetalloxid, RN, Wasser sowie gegebenenfalls Aluminiumoxid enthält und ausgedrückt in Molverhältnissen von Oxiden eine Zusammensetzung aufweist, die in die folgenden Bereiche fällt:

| | | |
|---|---|---|
| $Al_2O_3/SiO_2$ | = | 0 bis <0,005 |
| $M_2O/SiO_2$ | = | 0 bis 2,0 |
| $OH^-/SiO_2$ | = | 0 bis 0,15 |
| $H^+$(zugesetzt)/$SiO_2$ | = | 0 bis 0,2 |
| $H_2O/SiO_2$ | = | 10 bis 100 |
| $(RN)_2O/SiO_2$ | = | 0,01 bis 2,0 |

worin M wenigstens ein Alakalimetall und RN ein Amin der Formel $NH_2$—$C_xH_{2x}$—$NH_2$ ist, worin x von 4 bis 12 ist und der $pk_a$⩾7 ist; sowie das Halten dieser Mischung bei Kristallisationstemperatur, bis sich Kristalle des Zeolithen gebildet haben.

11. Ein Verfahren nach Anspruch 10, bei dem

$Al_1O_3/SiO_2$ = 0 bis 0,002

12. Ein Verfahren nach Anspruch 10 oder Anspruch 11, bei dem

$OH^-/SiO_2$ = 0 bis 0,10

13. Ein Verfahren nach einem beliebigen der Ansprüche 10 bis 12, bei dem

| | | |
|---|---|---|
| $M_2O/SiO_2$ | = | 0,1 bis 1,0 |
| $H^+$(zugesetzt)/$SiO_2$ | = | 0 bis 0,05 |
| $(RN)_2O/SiO_2$ | = | 0,05 bis 1,0 |

**Revendications**

1. Matériau zéolitique cristallin présentant un réseau comportant des tétraèdres de $SiO_4$ réticulés par le partage des atomes d'oxygène, présentant la forme de composition exprimée en termes de moles d'oxydes pour 100 moles de silice:

$$(0 \text{ à } 15)(RN)_2O:(1 \text{ à } 15)M_{2/n}O:(0 \text{ à } 2)Al_2O_3:(100)SiO_2$$

dans laquelle M est au moins un cation de valence n et RN est un composé organique en $C_1$ à $C_{20}$ présentant au moins un groupe fonctionnel amine de pKa⩾7, et étant caractérisé par au moins les espacements interplanaires et les intensités relatives de son spectre de diffraction aux rayons X:

| d(A) | Intensité relative |
|---|---|
| 11,8±0,2 | Faible à très fort |
| 10,2±0,2 | Faible à moyen |
| 7,2±0,15 | Faible |
| 4,2±0,08 | Très fort |
| 3,9±0,08 | Très fort |
| 3,6±0,06 | Faible |
| 3,1±0,05 | Faible |
| 2,85±0,05 | Faible |

2. Un matériau zéolitique cristallin selon la revendication 1, dont le réseau comporte également $AlO_4$.

3. Un matériau zéolitique cristallin selon la revendication 1 ou la revendication 2, dans lequel RN est de formule $H_2N—C_xH_{2x}—NH_2$, dans laquelle x est de 4 à 12.

4. Un matériau zéolitique cristallin selon la revendication 1 ou la revendication 2 dans lequel RN est de la formule $C_xH_{2x+1}—NH_2$, dans laquelle x est de 1 à 20.

5. Un matériau zéolitique cristallin selon l'une des revendications 2 à 4, qui contient de l'hydrogène et de l'ammonium ou des cations des terres rares.

6. Un matériau zéolitique cristallin selon l'une des revendications 2 à 5, dans lequel le rapport molaire du silicium à l'aluminium est de 800 à 15 000.

7. Une méthode pour préparer le matériau zéolitique cristallin revendiqué dans la revendication 1, qui consiste à préparer un mélange réactionnel renfermant une source de silicium, un oxyde de métal alcalin, RN, de l'eau et éventuellement de l'alumine, et présentant une composition en termes de rapports molaires d'oxydes se situant dans les plages suivantes:

| | | |
|---|---|---|
| $Al_2O_3/SiO_2$ | = | 0 à 0,02 |
| $M_2O/SiO_2$ | = | 0 à 2,0 |
| $OH^-/SiO_2$ | = | 0 à 0,25 |
| $H^+$(ajouté)/$SiO_2$ | = | 0 à 0,2 |
| $H_2O/SiO_2$ | = | 10 à 100 |
| $(RN)_2O/SiO_2$ | = | 0,01 à 2,0 |

dans lesquelles M est au moins un métal alcalin et RN est une amine de formule $C_xH_{2x+1}—NH_2$ dans laquelle x est de 1 à 20 et de $pk_a⩾7$; et à maintanir le mélange à la température de cristallisation jusqu'à ce que les cristaux de la zéolite se forment.

8. Une méthode pour préparer le matériau zéolitique cristallin revendiqué dans la revendication 1, qui consiste à préparer un mélange réactionnel renfermant une source de silice, un oxyde de métal alcalin, RN, de l'eau et éventuellement de l'alumine, et présentant une composition en termes de rapports molaires d'oxydes se situant dans les plages suivantes:

| | | |
|---|---|---|
| $Al_2O_3/SiO_2$ | = | 0 à 0,02 |
| $M_2O/SiO_2$ | = | 0 à 2,0 |
| $OH^-/SiO_2$ | = | 0 à 0.25 |
| $H^+$(ajouté)/$SiO_2$ | = | 0 à 0,2 |
| $H_2O/SiO_2$ | = | 10 à 100 |
| $(RN)_2O/SiO_2$ | = | 0,01 à 2,0 |

dans lesquelles M est au moins un métal alcalin et RN est une amine cyclique ayant jusqu'à 20 atomes de carbone et un $pk_a⩾7$; et à maintenir le mélange à la température de cristallisation jusqu'à ce que des cristaux de zéolite se forment.

9. Une méthode selon la revendication 7 ou la revendication 8, dans laquelle le mélange de réaction présente la composition:

| | | |
|---|---|---|
| $Al_2O_3/SiO_2$ | = | 0 à 0,01 |
| $M_2O/SiO_2$ | = | 0,1 à 1,0 |
| $OH^-/SiO_2$ | = | 0 à 0,1 |
| H (ajouté)/$SiO_2$ | = | 0 à 0,05 |
| $H_2O/SiO_2$ | = | 20 à 70 |
| $(RN)_2O/SiO_2$ | = | 0,05 à 1,0 |

10. Une méthode pour préparer un matériau zéolitique cristallin revendiqué dans la revendication 1, qui consiste à préparer un mélange réactionnel renfermant une source de silice, un oxyde de métal alcalin, RN, de l'eau et éventuellement de l'alumine, et présentant une composition en termes de rapports molaires d'oxydes se situant dans les plages suivantes:

| | | |
|---|---|---|
| $Al_2O_3/SiO_2$ | = | 0 à <0,005 |
| $M_2O/SiO_2$ | = | 0 à 2,0 |
| $OH^-/SiO_2$ | = | 0 à 0,15 |
| $H^+$(ajouté)/$SiO_2$ | = | 0 à 0,2 |
| $H_2O/SiO_2$ | = | 10 à 100 |
| $(RN)_2O/SiO_2$ | = | 0,01 à 2,0 |

dans lesquelles M est au moins un métal alcalin et RN est une amine de formule $NH_2—C_xH_{2x}—NH_2$ dans laquelle x est de 4 à 12 et de $pk_a \geqslant 7$; et à maintenir le mélange à la température de cristallisation jusqu'à ce que les cristaux de la zéolite se forment.

11. Méthode selon la revendication 10, dans laquelle $Al_2O_3/SiO_2$=0 à 0,002.

12. Méthode selon la revendication 10 ou la revendication 11, dans laquelle

| | | |
|---|---|---|
| $OH^-/SiO_2$ | = | 0 à 0,10. |

13. Méthode selon l'une quelconque des revendications 10 à 12, dans laquelle

| | | |
|---|---|---|
| $M_2O/SiO_2$ | = | 0,1 à 1,0 |
| $H^+$(ajouté)/$SiO_2$ | = | 0 à 0,05 |
| $(RN)_2O/SiO_2$ | = | 0,05 à 1,0 |

FIGURE I

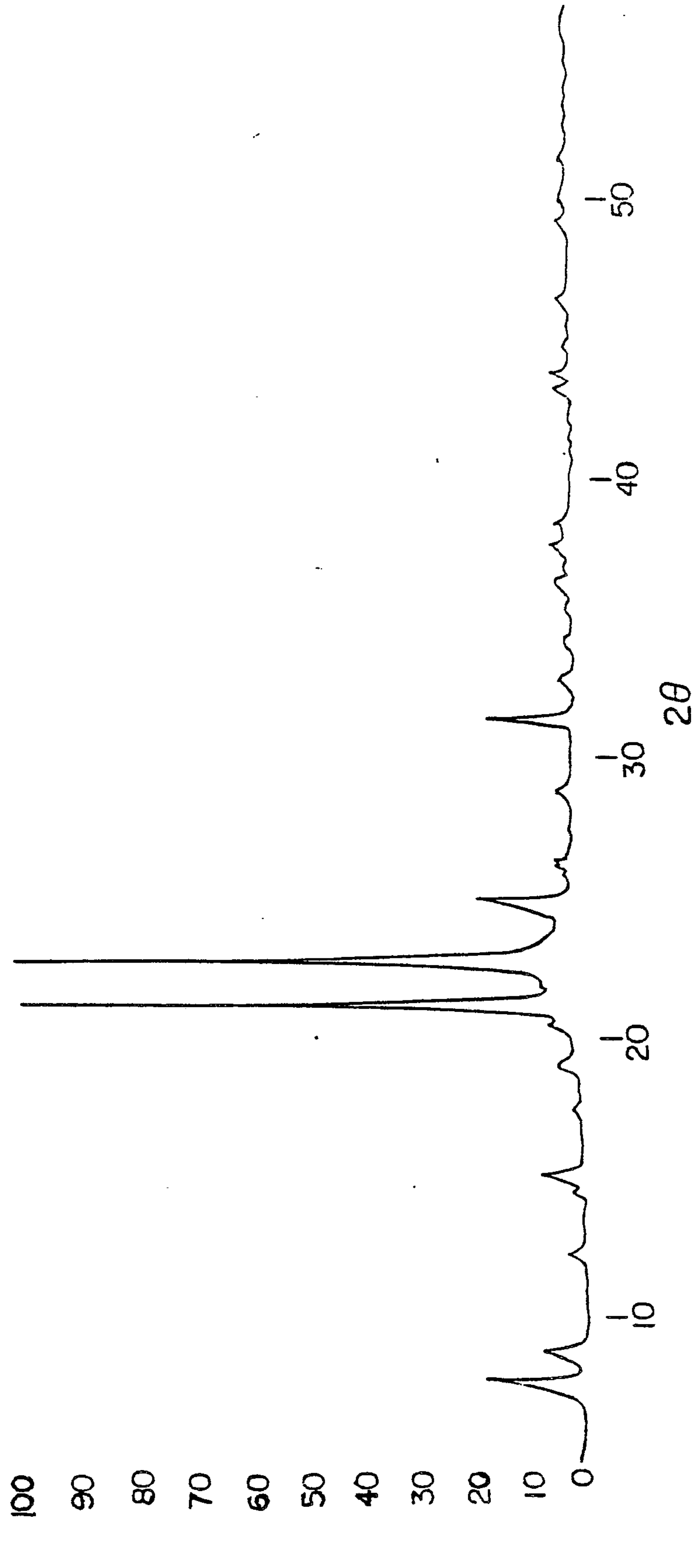

FIGURE 2

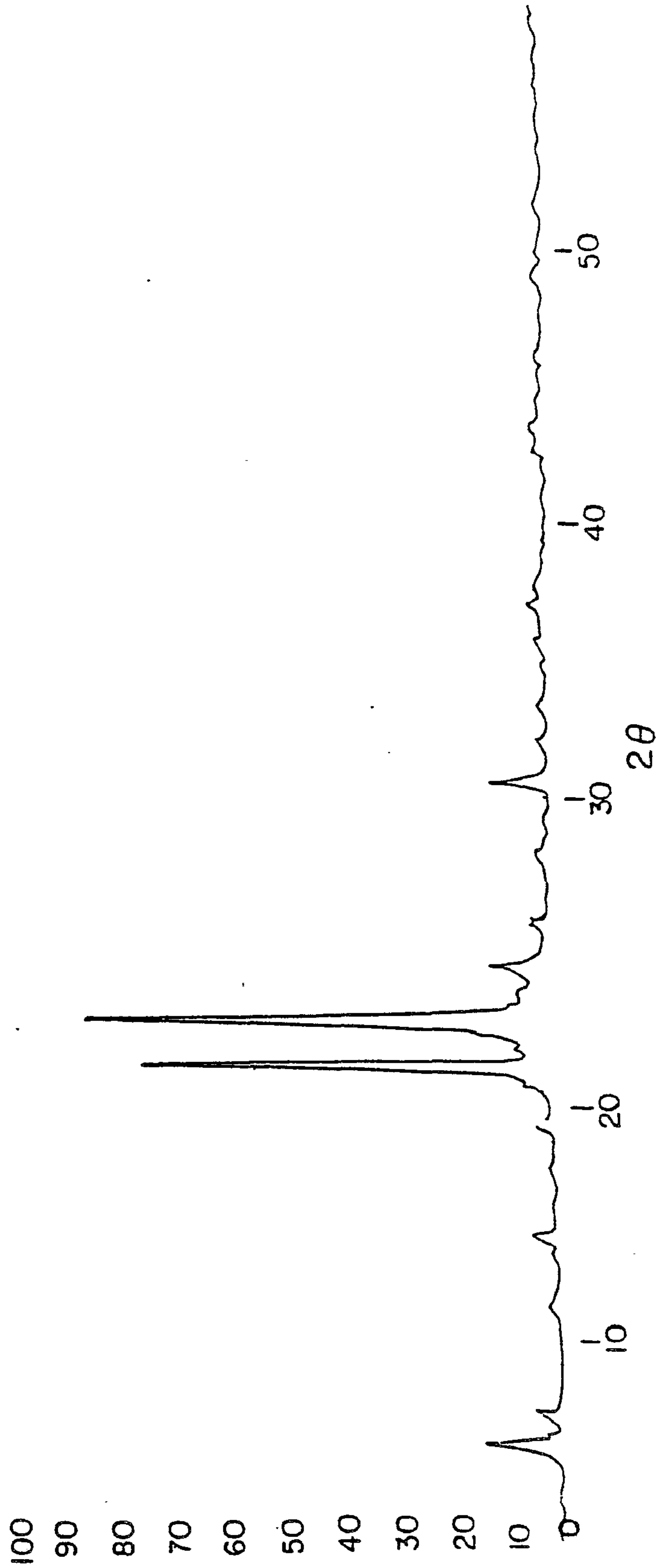

FIGURE 3

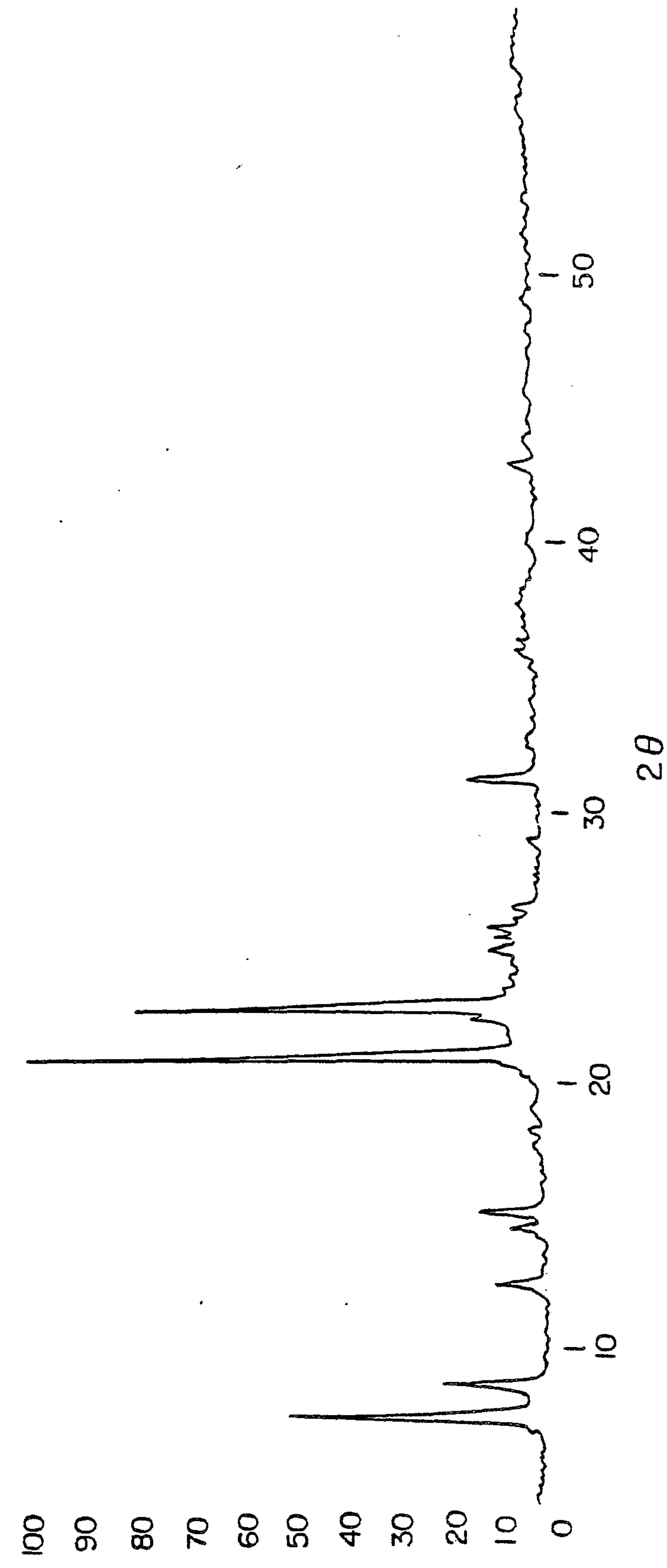

FIGURE 4